# EUROPEAN PATENT APPLICATION

(11) **EP 4 645 032 A2**
(43) Date of publication of application: **05.11.2025**
(21) Application number: 25202852.7
(22) Date of filing: 10.01.2020
(51) Int. Cl.: G06F 1/16

(54) **INTERFACE DEVICE FOR WEARABLE VISUALIZATION DEVICE, SYSTEMS AND METHODS**

(30) Priority: 09.01.2020 US 202016738917
(62) Divisional of application: 20703907.4
(71) Applicant: Universal City Studios LLC, Universal City, CA 91608 (US)
(72) Inventor: GOODNER, Douglas Evan, Orlando, 32819 (US); CHUNG, Christopher Wai Yin, Orlando, 32819 (US); RAIJ, Andrew Brian, Orlando, 32819 (US); HILL, JR., Gregory Addison, Orlando, 32819 (US)
(74) Representative: Keltie LLP

(57) **Abstract**

An interface device (14) for a wearable visualization device (12), the interface device (14) comprising: a head strap assembly (36) configured to couple to a head of a user to secure the interface device (14) to the head; an interface frame (40) coupled to the head strap assembly (36) and configured to directly couple to a housing (18) of the wearable visualization device (12); a mask (52) coupled to the head strap assembly (36), the mask (52) comprising a surface wherein, in a fitted configuration of the interface device (14) on the head of the user, a first portion of the surface is configured to rest on the head of the user such that the mask (52) supports at least a portion of a weight of the interface device (14), and wherein, in the fitted configuration of the interface device (14), a second portion of the surface is configured not to rest on the head of the user; and one or more magnets (72, 86) supported on the interface frame (40), wherein the one or more magnets (72, 86) enable the interface frame (14) to removably directly couple to the housing (18) of the wearable visualization device (12).

## Description

### BACKGROUND

This section is intended to introduce the reader to various aspects of art that may be related to various aspects of the present techniques, which are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

Amusement parks and/or theme parks may include various entertainment attractions, restaurants, and rides useful in providing enjoyment to guests. Areas of the amusement park may have different themes that are specifically targeted to certain audiences. For example, certain areas may include themes that are traditionally of interest to children, while other areas may include themes that are traditionally of interest to more mature audiences. Generally, such areas having themes may be referred to as an attraction or a themed attraction. It is recognized that it may be desirable to enhance the immersive experience for guests of such attractions, such as by augmenting the themes with virtual features.

### SUMMARY

A summary of certain embodiments disclosed herein is set forth below. It should be understood that these aspects are presented merely to provide the reader with a brief summary of these certain embodiments and that these aspects are not intended to limit the scope of this disclosure. Indeed, this disclosure may encompass a variety of aspects that may not be set forth below.

In one embodiment, an interface device for a wearable visualization device includes a head strap assembly configured to couple to a head of a user to secure the interface device to the head. The interface device also includes an interface frame coupled to the head strap assembly and a magnet supported on the interface frame. The magnet enables the interface device to removably couple to the wearable visualization device.

In one embodiment, an augmented reality, virtual reality, and/or mixed reality (AR/VR) system includes an interface device having a head strap assembly configured to couple to a head of a user and an interface frame having a first plurality of magnets. The AR/VR system also includes a wearable visualization device having a second plurality of magnets and configured to removably couple to the interface frame to transition between an engaged configuration and a disengaged configuration. The first plurality of magnets magnetically couples to the second plurality of magnets to retain the wearable visualization device on the interface device in the engaged configuration.

In one embodiment, a wearable visualization system includes an interface device having an interface frame including peripheral portions and a lip extending between the peripheral portions. A first plurality of magnets is positioned adjacent the lip and a second plurality of magnets is positioned adjacent the peripheral portions. The wearable visualization system includes a wearable visualization device including a housing having additional peripheral portions and a panel extending between the additional peripheral portions. A third plurality of magnets is positioned adjacent the panel and a fourth plurality of magnets is positioned adjacent the additional peripheral portions. The first plurality of magnets is configured to magnetically couple to the third plurality of magnets and the second plurality of magnets is configured to magnetically couple to the fourth plurality of magnets to couple the wearable visualization device to the interface device.

Various refinements of the features noted above may be undertaken in relation to various aspects of the present disclosure. Further features may also be incorporated in these various aspects as well. These refinements and additional features may exist individually or in any combination.

### BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:
FIG. 1 is a perspective view of a wearable visualization device and an interface device of an augmented reality, virtual reality, and/or mixed reality system (AR/VR system) in an engaged configuration, in accordance with present embodiments;
FIG. 2 is a perspective view of the wearable visualization device and the interface device of FIG. 1 in a detached configuration, in accordance with present embodiments;
FIG. 3 is an exploded view of the interface device of FIG. 1, in accordance with present embodiments;
FIG. 4 is an exploded view of a portion of an interface frame that may be used in the interface device of FIG. 1, in accordance with present embodiments;
FIG. 5 is a partial exploded view of the interface frame of FIG. 4, in accordance with present embodiments;
FIG. 6 is a perspective view of a visor assembly that may be used in the interface device of FIG. 1, in accordance with present embodiments;
FIG. 7 is an exploded view of a first head strap portion that may be used in the interface device of FIG. 1, in accordance with present embodiments;
FIG. 8 is a partial exploded view of a second head strap portion that may be used in the interface device of FIG. 1, in accordance with present embodiments;
FIG. 9 is a partial exploded view of a head strap assembly that may be used in the interface device of FIG. 1, in accordance with present embodiments;
FIG. 10 is a partial exploded view of the interface device of FIG. 1, in accordance with present embodiments;
FIG. 11 is a rear view of the interface device of FIG. 1, in accordance with present embodiments;
FIG. 12 is a top view of the interface device of FIG. 1, in accordance with present embodiments;
FIG. 13 is a rear view of the wearable visualization device of FIG. 1, in accordance with present embodiments;
FIG. 14 is a perspective view of an interface device and a wearable visualization device of an AR/VR system in a detached configuration, in accordance with present embodiments; and
FIG. 15 is a perspective view of an interface device for an AR/VR system, in accordance with present embodiments.

### DETAILED DESCRIPTION

One or more specific embodiments will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," and "the" are intended to mean that there are one or more of the elements. The terms "comprising," "including," and "having" are intended to be inclusive and mean that there may be additional elements other than the listed elements. Additionally, it should be understood that references to "one embodiment" or "an embodiment" of the present disclosure are not intended to be interpreted as excluding the existence of additional embodiments that also incorporate the recited features.

An amusement park may include an augmented reality (AR), a virtual reality (VR), and/or a mixed reality (a combination of AR and VR) system (AR/VR system) that is configured to enhance a guest experience of an amusement park attraction by providing guests with AR/VR experiences (e.g., AR experiences, VR experiences, or both). Indeed, combinations of certain hardware configurations, software configurations (e.g., algorithmic structures and/or modeled responses), as well as certain attraction features may be utilized to provide guests with AR/VR experiences that may be customizable, personalized, and/or interactive.

For example, the AR/VR system may include a wearable visualization device, such as a head mounted display (e.g., electronic goggles or displays, eyeglasses), which may be worn by a guest and may be configured to enable the guest to view AR/VR scenes. In particular, the wearable visualization device may be utilized to enhance a guest experience by virtually overlaying features in a real-world environment of the amusement park, by providing adjustable virtual environments to provide different experiences in an amusement park ride, and so forth. Unfortunately, without the disclosed embodiments, it may be difficult and/or time-consuming to comfortably and securely attach the wearable visualization device to a guest's head (e.g., such as between ride cycles of the amusement park ride). Moreover, without the disclosed embodiments, it may be tedious to clean and/or perform maintenance on certain components of the wearable visualization device.

Therefore, embodiments of the present disclosure are directed toward a guest interface device, also referred to herein as an interface device, which enables quick and comfortable securement of a wearable visualization device to the head of a guest. The guest interface device may also mitigate a likelihood of contaminant buildup on the wearable visualization device due to usage of the wearable visualization device by the guest. For example, the guest interface device may include a head strap assembly that is configured to removably couple to the guest's head. A size (e.g., an inner circumferential dimension) of the head strap assembly may be adjustable to accommodate a wide variety of guest hairstyles and/or head sizes/shapes. To this end, the head strap assembly may facilitate coupling the guest interface device to guests of various age ranges and/or demographic groups. The guest interface device includes mating features that are configured to engage with respective mating features of the wearable visualization device to facilitate coupling and decoupling the guest interface device to and from the wearable visualization device. As such, a guest may (e.g., while wearing the guest interface device) quickly couple or decouple the wearable visualization device from the guest interface device by engaging or disengaging, respectively, the mating features of the wearable visualization device with the mating features of the guest interface device. In this manner, the guest interface device may facilitate rapid attachment and detachment of the wearable visualization device to and from the guest interface device, substantially without direct physical contact between the guest's head and the wearable visualization device (e.g., a housing of the wearable visualization device). In some embodiments, the guest interface device may therefore block (e.g., reduce or substantially eliminate) buildup of contaminants (e.g., skin, hair) on the wearable visualization device. The guest may, after detaching the wearable visualization device from the guest interface device (e.g., such as when deboarding a ride vehicle of the amusement park ride) and after removing the guest interface device from the guest's head, discard the guest interface device at an appropriate location (e.g., a collection bin). As such, the guest interface device may undergo cleaning operations prior to being presented to another guest of the amusement park.

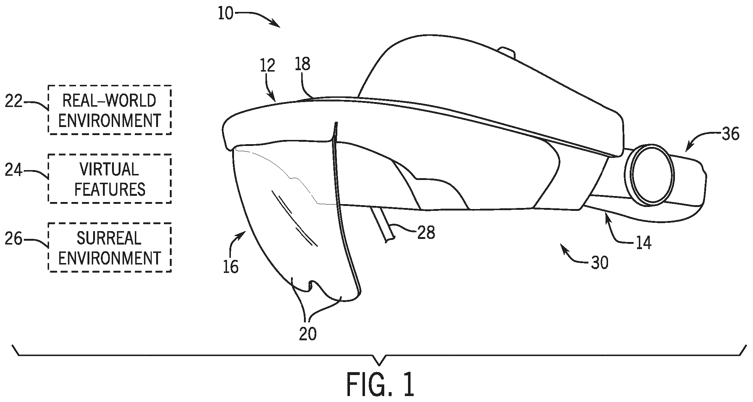

With the foregoing in mind, FIG. 1 is a perspective view an embodiment of an AR/VR system 10 (e.g., a wearable visualization system) configured to enable a user (e.g., a guest, an amusement park employee, a passenger of a ride vehicle) to experience (e.g., view, interact with) AR/VR scenes. The AR/VR system 10 includes a wearable visualization device 12 (e.g., a head mounted display) and a guest interface device 14 that, as discussed in detail below, are removably coupleable to one another to facilitate usage of the AR/VR system 10.

In the illustrated embodiment, the wearable visualization device 12 includes electronic eyeglasses 16 (e.g., AR/VR eyeglasses, goggles) that are coupled to a housing 18 of the wearable visualization device 12. The electronic eyeglasses 16 may include one or more displays 20 (e.g., transparent, semi-transparent, opaque) onto which certain virtual features may be overlaid. In some embodiments, the displays 20 may enable the user to view a real-world environment 22 (e.g., physical structures in the attraction) through the displays 20 with certain virtual features 24 (e.g., AR features) overlaid onto the displays 20 so that the user perceives the virtual features 24 as being integrated into the real-world environment 22. That is, the electronic eyeglasses 16 may at least partially control a view of the user by overlaying the virtual features 24 onto a line of sight of the user. To this end, the wearable visualization device 12 may enable the user to visualize and perceive a surreal environment 26 (e.g., a game environment) having certain virtual features 24 overlaid onto the physical, real-world environment 22 viewable by the user through the displays 20. By way of non-limiting example, the displays 20 may include transparent (e.g., see-through) light emitting diode (LED) displays or transparent (e.g., see-through) organic light emitting diode (OLED) displays.

In some embodiments, the wearable visualization device 12 may completely control the view of the user (e.g., using opaque viewing surfaces). That is, the displays 20 may include opaque or non-transparent displays configured to display virtual features 24 (e.g., VR features) to the user. As such, the surreal environment 26 viewable by the user may be, for example, a real-time video that includes real-world images of the physical, real-world environment 22 electronically merged with one or more virtual features 24. Thus, in wearing the wearable visualization device 12, the user may feel completely encompassed by the surreal environment 26 and may perceive the surreal environment 26 to be the real-world environment 22 that includes certain virtual features 24. In some embodiments, the wearable visualization device 12 may include features, such as light projection features, configured to project light into one or both eyes of the user so that certain virtual features 24 are superimposed over real-world objects viewable by the user. Such a wearable visualization device 12 may be considered to include a retinal display.

As such, it should be appreciated that the surreal environment 26 may include an AR experience, a VR experience, a mixed reality experience, a computer-mediated reality experience, a combination thereof, or other similar surreal environment. Moreover, it should be understood that the wearable visualization device 12 may be used alone or in combination with other features to create the surreal environment 26. Indeed, as discussed below, the user may wear the wearable visualization device 12 throughout a duration of a ride of an amusement park ride or during another time, such as during a game, at throughout a particular area or attraction of an amusement park, during a ride to a hotel associated with the amusement park, at the hotel, and so forth. In some embodiments, when implemented in the amusement park setting, the wearable visualization device 12 may be physically coupled to (e.g., tethered via a cable 28) to a structure (e.g., a ride vehicle of the amusement park ride) to block separation of the wearable visualization device 12 from the structure and/or may be electronically coupled to (e.g., via the cable 28) to a computing system to facilitate operation of the wearable visualization device 12 (e.g., display of the virtual features 24).

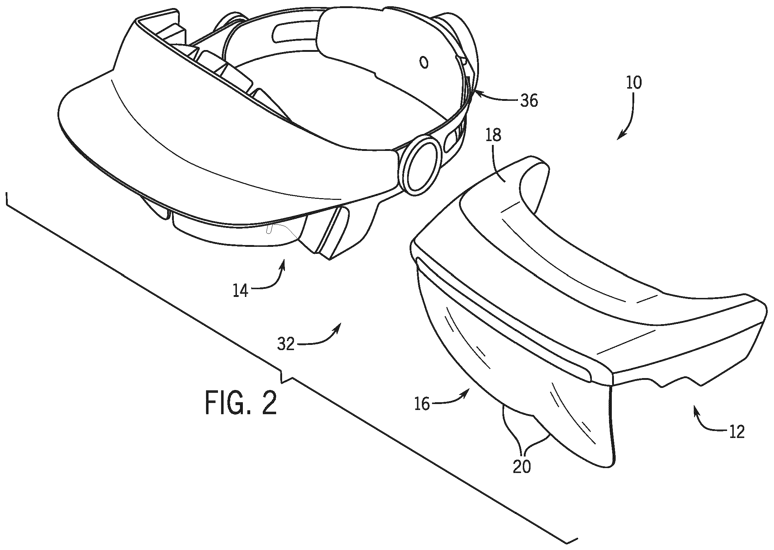

As discussed in detail below, the wearable visualization device 12 is removably coupleable (e.g., toollessly coupleable; coupleable without tools; coupled without threaded fasteners, such as bolts; separable without tools and without breaking the components of the wearable visualization device 12 or the guest interface device 14) to the guest interface device 14 to enable the wearable visualization device 12 to quickly transition between an engaged configuration 30, in which the wearable visualization device 12 is coupled to the guest interface device 14, and a disengaged or detached configuration 32 (see, e.g., FIG. 2), in which the wearable visualization device 12 is decoupled from the guest interface device 14. The guest interface device 14 is configured to be affixed to the user's head and, thus, enable the user to comfortably wear the wearable visualization device 12 throughout various attractions or while traversing certain amusement park environments. For example, the guest interface device 14 may include a head strap assembly 36 that is configured to span about a circumference of the user's head and configured to be tightened (e.g., constricted) on the user's head. In this manner, the head strap assembly 36 facilitates affixing the guest interface device 14 to the head of the user, such that the guest interface device 14 may be utilized to retain the wearable visualization device 12 on the user (e.g., when the wearable visualization device 12 is in the engaged configuration 30). As discussed below, the guest interface device 14 enables the user to couple and decouple the wearable visualization device 12 from the guest interface device 14 (e.g., without detachment of the guest interface device 14 from the user's head).

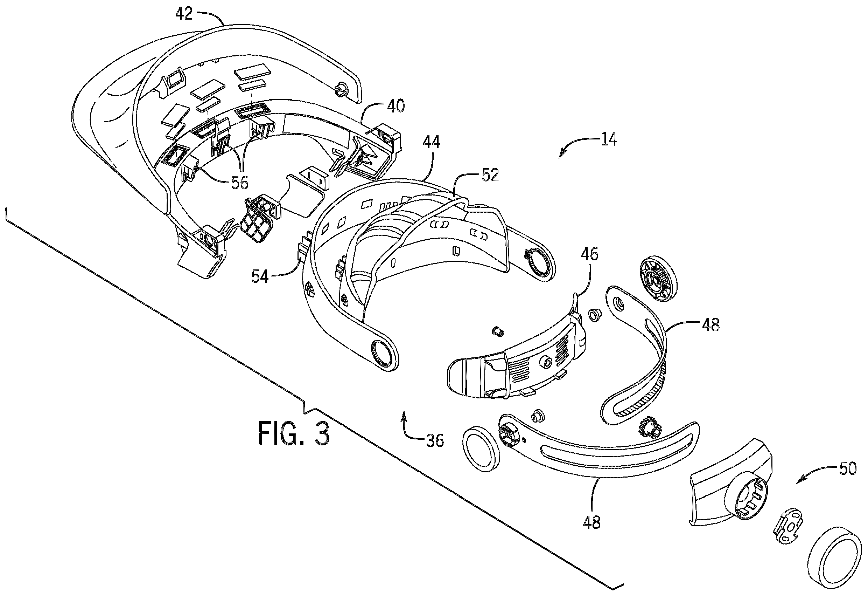

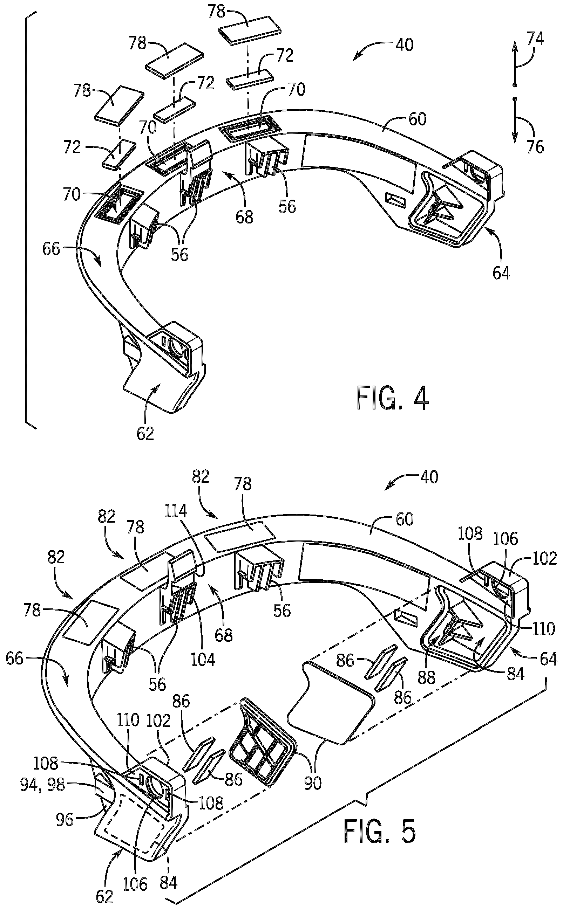

To better illustrate the guest interface device 14 and to facilitate the following discussion, FIG. 3 is an exploded view of an embodiment of the guest interface device 14. It should be noted that the following discussion with reference to FIG. 3 is intended to briefly introduce various components and subassemblies of the guest interface device 14, which will be described in further detail below with reference to FIGS. 4-15. As shown in the illustrated embodiment of FIG. 3, the guest interface device 14 includes an interface frame 40 that, as discussed below, is configured to engage with the wearable visualization device 12 to facilitate removably coupling the wearable visualization device 12 to the guest interface device 14. A visor 42 may be coupled to the interface frame 40. The visor 42 may include any suitable shape or profile (e.g., cap, helmet, sun visor). In certain embodiments, the visor 42 may be themed (e.g., colored, decorated, or otherwise modified) to match a theme (e.g., space theme, jungle theme) of an amusement park attraction in which the AR/VR system 10 is to be implemented.

The head strap assembly 36 includes a forward strap 44, a rearward strap 46, a pair of adjustment straps 48, and an adjustment assembly 50. The head strap assembly 36 is adjustable to accommodate head parameters (e.g., head sizes, head shapes, hair styles) of a variety of users to facilitate coupling the guest interface device 14 to the respective heads of the users. In some embodiments, the head strap assembly 36 includes a mask 52 that is configured to contact a forehead of the guest's head to facilitate alignment and/or securement of the guest interface device 14 to the guest's head. The head strap assembly 36 includes one or more first attachment features 54 configured to engage with respective second attachment features 56 of the interface frame 40. As such, engagement of the first and second attachment features 54, 56 enables the head strap assembly 36 to be coupled to the interface frame 40.

FIG. 4 is an exploded view of an embodiment of a portion of the interface frame 40. The interface frame 40 includes a body portion 60 having a first peripheral end 62 (e.g., end portion; lateral portion), a second peripheral end 64 (e.g., end portion; lateral portion) opposite to the first peripheral end 62, and a lip 66 extending between the first and second peripheral ends 62, 64. In some embodiments, the lip 66 may include a surface that extends generally orthogonally or cross-wise to an inner surface 68 of the body portion 60. The body portion 60 may be formed from a polymeric material via, for example, an injection molding process, an additive manufacturing process, or via another suitable manufacturing technique.

In the illustrated embodiment, the body portion 60 includes one or more pockets 70 or cavities that are formed within the lip 66. Each of the pockets 70 are configured to receive one or more primary magnets 72 (e.g., neodymium magnets). In some embodiments, the primary magnets 72 may be oriented such that a first polarity (e.g., north) of each of the primary magnets 72 is oriented in a first direction 74 and a second polarity (e.g., south) of each of the primary magnets 72 is oriented in a second direction 76. In certain embodiments, respective caps 78 may be disposed over the primary magnets 72 to encapsulate the primary magnets 72 within the pockets 70. Particularly, the caps 78 may be coupled to the lip 66 via, for example, suitable adhesives or an ultrasonic welding process. In this manner, in an installed configuration 82 (see, e.g., FIG. 5), the caps 78 may hermetically seal the primary magnets 72 within the pockets 70 to substantially block contaminants (e.g., water) from entering the pockets 70 and/or accumulating within the pockets 70. The caps 78 may be formed from the same material or from a different material as the body portion 60. In some embodiments, multiple primary magnets 72 may be positioned within each of the pockets 70. It should be understood that, when multiple primary magnets 72 are positioned within a respective pocket 70, these primary magnets 72 may be stacked in series (e.g., with opposite polarities facing one another) to increase an overall magnetic force (e.g., attractive force) that may generated by the primary magnets 72. Although three primary magnets 72 are shown in the illustrated embodiment of FIG. 4, it should be appreciated that, in other embodiments, the interface frame 40 may include any suitable quantity of primary magnets 72. As discussed below, the primary magnets 72 may engage with corresponding magnets and/or reaction materials included in the wearable visualization device 12 to facilitate magnetically coupling the wearable visualization device 12 to the interface frame 40.

FIG. 5 is a partial exploded view of an embodiment of the interface frame 40. In some embodiments, the body portion 60 includes peripheral cavities 84 that are formed within the first and second peripheral ends 62, 64 and configured to receive one or more secondary magnets 86. In particular, the secondary magnets 86 may be positioned within corresponding receiving channels 88 formed within the peripheral cavities 84. In some embodiments, multiple secondary magnets 86 may be positioned within each of the receiving channels 88. For example, in the illustrated embodiment, two secondary magnets 86 are configured to be positioned within each of the receiving channels 88. However, in other embodiments, any suitable quantity of secondary magnets 86 may be positioned within the receiving channels 88. It should be understood that, when multiple secondary magnets 86 are positioned within a respective receiving channel 88, these secondary magnets 86 may be stacked in series (e.g., with opposite polarities facing one another) to increase an overall magnetic force (e.g., attractive force) that may generated by the secondary magnets 86. As discussed below, the secondary magnets 86 may cooperate with the primary magnets 72 to facilitate magnetically coupling the wearable visualization device 12 to the interface frame 40.

In the illustrated embodiment, the interface frame 40 includes a pair of cover plates 90 that are configured to couple to the body portion 60 to encapsulate the secondary magnets 86 within the peripheral cavities 84. For example, similar to caps 78 discussed above, the cover plates 90 may be coupled to the body portion 60 (e.g., via adhesives or an ultrasonic welding process) to hermetically seal the secondary magnets 86 within the corresponding peripheral cavities 84. It should be understood that, in some embodiments, the peripheral cavities 84 may be sized to accommodate other components of the guest interface device 14, such as, for example, a radio frequency identification (RFID) tag or another suitable component. When used in the guest interface device 14, the RFID tag may facilitate tracking the location of the guest interface device 14 (e.g., such as during the ride through the amusement park ride and/or during a cleaning process) and/or may facilitate other techniques (e.g., displaying virtual features based on the location of the guest interface device 14). As such, the cover plates 90 may facilitate hermetically sealing such components within the peripheral cavities 84.

It should be understood that, in other embodiments, the primary magnets 72 and/or the secondary magnets 86 may be coupled to and/or integrated with any other suitable component or portion of the interface frame 40. As a non-limiting example, one or more primary magnets 72 may be located near the lip 66, near the inner surface 68, or near another suitable portion of the interface frame 40. Moreover, in certain embodiments, the interface frame 40 may not include the primary magnet 72 or the secondary magnets 86.

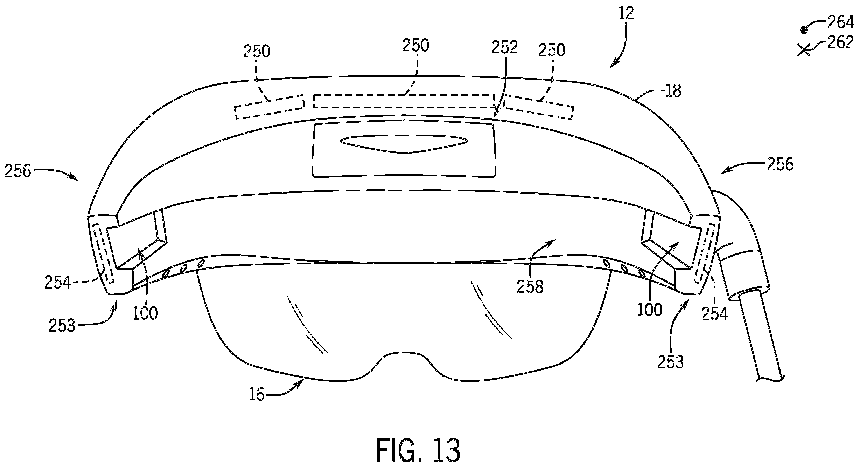

In some embodiments, the body portion 60 includes a plurality of support ribs 94 that protrude from an outer surface 96 of the body portion 60 (e.g., a surface opposite to the inner surface 68). Particularly, the body portion 60 may include a first support rib 98 that extends from the first peripheral end 62 and a second support rib that extends from the second peripheral end 64. As discussed in detail below, the support ribs 94 are configured to engage with corresponding support grooves 100 (see, e.g., FIG. 13) formed within the housing 18 of the wearable visualization device 12 to support the wearable visualization device 12 on the interface frame 40 and to facilitate coupling of the wearable visualization device 12 to the interface frame 40.

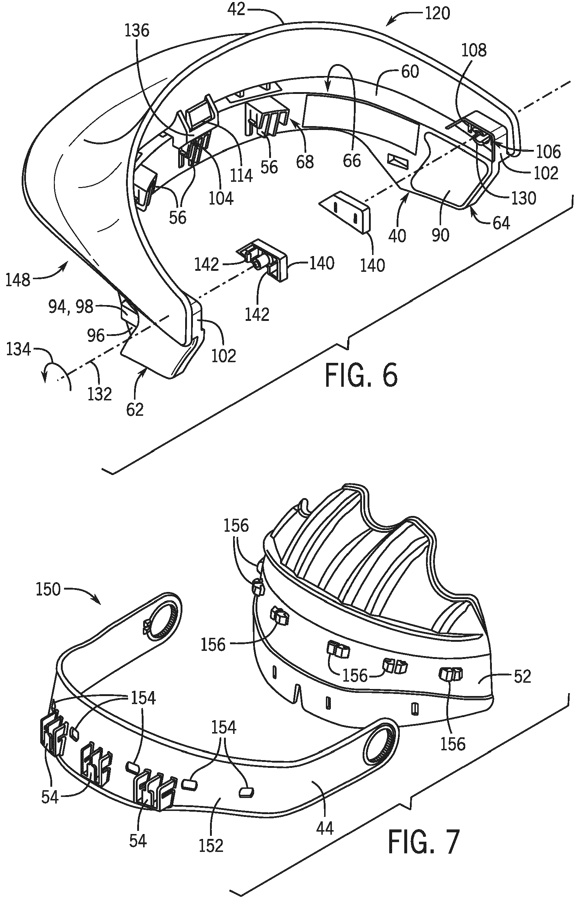

In some embodiments, the interface frame 40 includes mounting ears 102 that may extend from the lip 66 of the body portion 60 and a mounting prong 104 that may extend from the inner surface 68. The mounting ears 102 may each include an aperture 106 and one or more slots 108 formed within respective walls 110 of the mounting ears 102. The mounting prong 104 may include a hook 114 positioned near a distal end portion of the mounting prong 104. The mounting ears 102 and the mounting prong 104 facilitate removably coupling the visor 42 to the interface frame 40. For example, to better illustrate the engagement between the mounting ears 102, the mounting prong 104, and the visor 42, FIG. 6 is a perspective view of an embodiment of the interface frame 40 in an engaged configuration 120 with the visor 42.

The visor 42 includes a pair of visor protrusions 130 that are configured to engage with respective ones of the apertures 106 via a snap fit, an interference fit, or via another suitable connection. In some embodiments, the engagement between the visor protrusions 130 and the apertures 106 may enable the visor 42 to pivot relative to the interface frame 40 about an axis 132 extending through the apertures 106. As such, upon engagement of the visor protrusions 130 with the apertures 106, the visor 42 may be rotated about the axis 132 (e.g., relative to the interface frame 40) in a counter-clockwise direction 134 until the mounting prong 104 engages with a receiving feature 136 (e.g., a slot) of the visor 42. Particularly, the hook 114 of the mounting prong 104 may engage with the receiving feature 136 to removably couple (e.g., via a snap fit) the visor 42 to the mounting prong 104. It should be understood that, to remove the visor 42 from the interface frame 40, the user or an operator (e.g., a maintenance technician) may release the hook 114 from the receiving feature 136 and may remove (e.g., un-snap) the visor protrusions 130 from the respective apertures 106.

In some embodiments, the guest interface device 14 may include plugs 140 that are configured to engage with the mounting ears 102 to obscure or substantially block access to the visor protrusions 130. For example, the plugs 140 may include prongs 142 configured to engage with and/or couple to the corresponding slots 108 of the mounting ears 102 via an interference, a snap fit, or another suitable connection. Accordingly, in an engaged configuration with the mounting ears 102, the plugs 140 may block access to the visor protrusions 130 to inhibit tampering with the visor 42 by unauthorized personnel (e.g., guests). The plugs 140 may be removable from the slots 108 via specialty tools and/or techniques (e.g., tools possessed by the operator and/or not available to guests and/or techniques known by the operator and/or unknown by guests). The visor 42 and the interface frame 40 (e.g., in the engaged configuration 120) may be collectively referred to in subsequent discussion as a visor assembly 148 of the guest interface device 14.

As shown in the illustrated embodiment, the second attachment features 56 may protrude outwardly from the inner surface 68 and extend toward the axis 132. Although the body portion 60 includes three second attachment features 56 in the illustrated embodiment of FIG. 6, in other embodiments, the body portion 60 may include any other suitable quantity of the second attachment features 56. As discussed below, the second attachment features 56 are configured to engage with the corresponding first attachment features 54 (see, e.g., FIG. 7) of the head strap assembly 36 to enable the visor assembly 148 to couple to the head strap assembly 36.

FIG. 7 is a perspective view of an embodiment of a first head strap portion 150 of the head strap assembly 36, which may include the forward strap 44 and the mask 52. As shown in the illustrated embodiment, the first attachment features 54 may be formed integrally with the forward strap 44 and/or may extend from a surface 152 of the forward strap 44. For example, in some embodiments, the forward strap 44 may be a single piece component that includes the first attachment features 54 and is formed from a polymeric material via an injection molding process, an additive manufacturing process, or via another suitable process. The forward strap 44 may include a plurality of apertures 154 or slots formed therein, which are configured to receive corresponding connectors 156 (e.g., protrusions) of the mask 52. The connectors 156 may be formed integrally with the mask 52 and/or may be configured to couple to the apertures 154 via a snap-fit, an interference fit, or via another suitable connection. As such, the apertures 154 and the connectors 156 may facilitate coupling the mask 52 to the forward strap 44. It should be appreciated that, in other embodiments, suitable adhesives and/or fasteners may be used to couple the mask 52 to the forward strap 44 in addition to, or in lieu of, the connectors 156. As discussed below, the mask 52 may facilitate alignment and/or support of the guest interface device 14 on the head of the user.

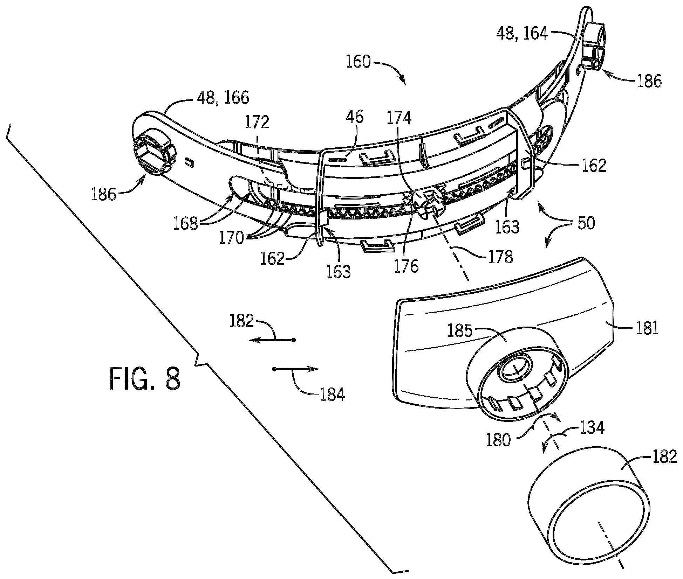

FIG. 8 is a perspective view of an embodiment a second head strap portion 160 of the head strap assembly 36, which may include the rearward strap 46, the adjustment straps 48, and the adjustment assembly 50. The rearward strap 46 includes one or more supports 162 having slots 163 formed therein. The slots 163 are configured to receive the adjustment straps 48 (e.g., a first adjustment strap 164, a second adjustment strap 166) and enable the adjustment straps 48 to translate through the slots 163 (e.g., relative to and along the rearward strap 46).

The first adjustment strap 164 and the second adjustment strap 166 each include an elongated slot 168 formed therein. The first adjustment strap 164 includes a first rack 170 (e.g., a first set of teeth) that extends along a lower edge (e.g., with respect to a direction of gravity) of the corresponding elongated slot 168 of the first adjustment strap 164. The second adjustment strap 166 includes a second rack 172 (e.g., a second set of teeth) that extends along an upper edge of the corresponding elongated slot 168 of the second adjustment strap 166. The rearward strap 46 is configured to receive and support a pinion 174 of the adjustment assembly 50 that is rotatably coupled to the rearward strap 46. The pinion 174 is configured to extend through the elongated slots 168 of the first and second adjustment straps 164, 166, such that teeth 176 of the pinion 174 may engage with the first rack 170 of the first adjustment strap 164 and with the second rack 172 of the second adjustment strap 166. As such, rotation of the pinion 174 (e.g., about an axis 178, in a clockwise direction 180) induces translational movement of the first adjustment strap 164 (e.g., relative to the rearward strap 46) generally along a first direction 182 and induces translational movement of the second adjustment strap 166 (e.g., relative to the rearward strap 46) generally along a second direction 184 that is opposite to the first direction 182. As discussed below, in this manner, engagement between the pinion 174 and the first and second racks 170 ,172 may enable a user to adjust an inner circumferential dimension of the head strap assembly 36 to adjust the head strap assembly 36 to a size that enables the head strap assembly 36 to be suitably positioned on the user's head. For example, rotation of the pinion 174 (e.g., in the clockwise direction 180) may reduce (e.g., restrict) an inner circumferential dimension of the head strap assembly 36, while rotation of the pinion 174 (e.g., in the counter-clockwise direction 134) may enlarge (e.g., widen) the inner circumferential dimension of the head strap assembly 36.

The adjustment assembly 50 includes a cover plate 181 that is configured to couple to the rearward strap 46 and to cover at least a portion of the elongated slots 168 of the first and second adjustment straps 164, 166. An adjustment knob 182 may be disposed about a guide ring 185 of the cover plate 181 and may be coupled to the pinion 174. As such, a user may, via rotation of the adjustment knob 182, adjust the pinion 174 to increase and/or decrease an inner circumferential dimension of the head strap assembly 36, as discussed below.

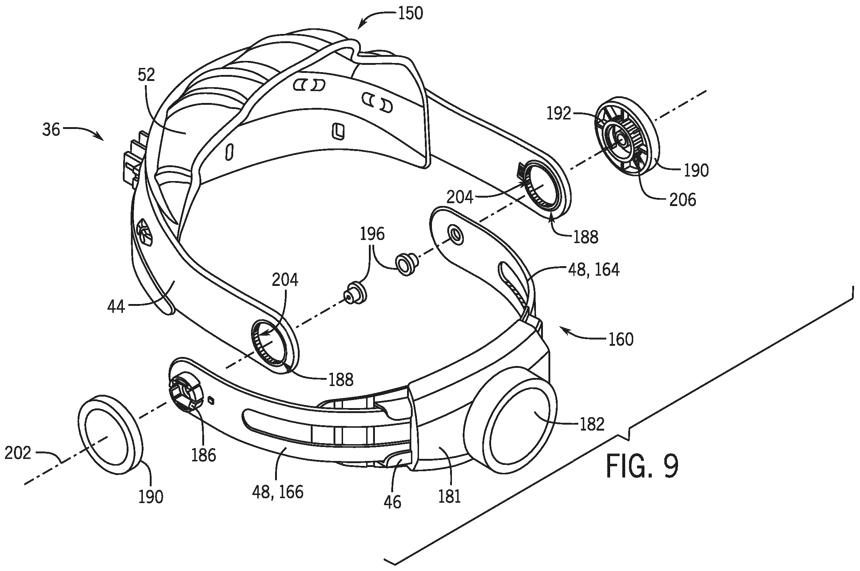

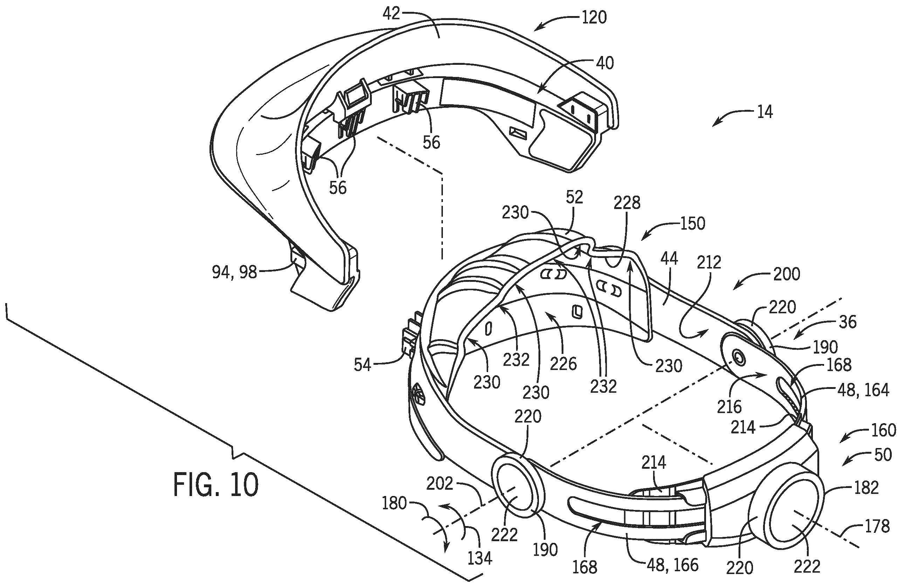

The first and second adjustment straps 164, 166 each include mounting protrusions 186 that facilitate coupling (e.g., pivotably coupling) the second head strap portion 160 to the first head strap portion 150. For example, to better illustrate the engagement between the first and second head strap portions 150, 160, FIG. 9 is a partial exploded view of an embodiment of the head strap assembly 36. In the illustrated embodiment, the forward strap 44 includes a pair of passages 188 formed therein. The head strap assembly 36 includes a set of pivoting knobs 190 that each include a cylindrical member 192. The cylindrical members 192 of the pivoting knobs 190 are configured to engage with the passages 188 to rotatably couple the pivoting knobs 190 to the forward strap 44. Upon insertion of the pivoting knobs 190 into the passages 188, the mounting protrusions 186 of the first and second adjustment straps 164, 166 may be inserted into and coupled to (e.g., via adhesives, via a snap-fit) the corresponding cylindrical members 192 of the pivoting knobs 190. In some embodiments, pegs 196 may be configured to extend through the first and second adjustment straps 164, 166 to rigidly couple the first and second adjustment straps 164, 166 to the corresponding pivoting knobs 190. As such, in an assembled configuration 200 (see, e.g., FIG. 10) of the head strap assembly 36, the pivoting knobs 190 may pivotably couple the first head strap portion 150 to the second head strap portion 160. Accordingly, when the head strap assembly 36 is in the assembled configuration 200, the pivoting knobs 190, the pegs 196, and the second head strap portion 160 may be rigidly coupled (e.g., non-rotatably coupled) to one another and configured to rotate together about an axis 202 (e.g., extending through the passages 188) relative to the first head strap portion 150 of the head strap assembly 36.

In some embodiments, an inner circumference of each of the passages 188 may include an interior ribbed profiled 204 (e.g., a knurled profile) and an outer circumference of each of the cylindrical members 192 may include exterior ribbed profile 206 (e.g., a knurled profile). The interior ribbed profiles 204 of the passages 188 may be configured to engage with the exterior ribbed profiles 206 of the cylindrical members 192 upon insertion of the pivoting knobs 190 into the corresponding passages 188. As such, the engagement between the interior and exterior ribbed profiles 204, 206 of the passages 188 and the pivoting knobs 190 may form ratcheting interfaces between passages 188 and the corresponding pivoting knobs 190 that enable the pivoting knobs 190 to be positionable to a plurality of discrete positions within the passages 188 (e.g., relative to the forward strap 44). As discussed below, in this manner, the ratchet-like interfaces between the pivoting knobs 190 and the passages 188 enable the first head strap portion 150 to be positionable at a plurality of discrete orientations relative to the second head strap portion 160.

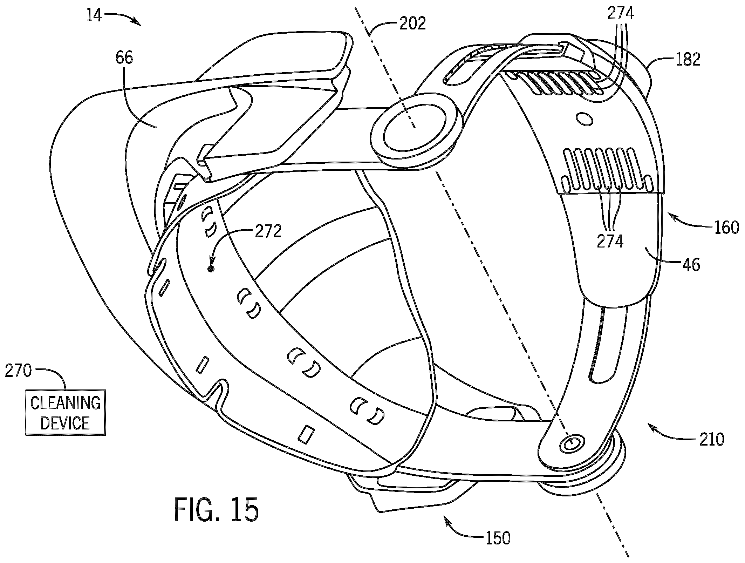

For example, to better illustrate and to facilitate the subsequent discussion, FIG. 10 is a perspective view of an embodiment of the guest interface device 14, illustrating the head strap assembly 36 in the assembled configuration 200. When the head strap assembly 36 is in the assembled configuration 200, a user may rotate either or both of the pivoting knobs 190 (e.g., about the axis 202, relative to the first head strap portion 150) to rotate the second head strap portion 160 (e.g., relative to the first head strap portion 150) about the axis 202 in the counter-clockwise or clockwise directions 134, 180. The ratcheting interface between the pivoting knobs 190 and the passages 188 may retain the first and second head strap portions 150, 160 in the particular orientation relative to one another as specified by the user. As an example, the ratcheting interface may retain the first head strap portion 150 at an acute position 210 (see, e.g., FIG. 15) relative to the second head strap portion 160. In accordance with these techniques, a user may utilize the pivoting knobs 190 to adjust relative positions of the first and second head strap portions 150, 160 to allow the head strap assembly 36 to more comfortably fit a shape of the user's head.

As noted above, the user may rotate the adjustment knob 182 to increase or decrease an inner circumferential dimension 212 of the head strap assembly 36. Accordingly, when the guest interface device 14 is equipped on the head of the user (also referred to hereinafter as an "equipped configuration"), the user may, for instance, rotate the adjustment knob 182 (e.g., about the axis 178) to decrease the inner circumferential dimension 212 and compress the head strap assembly 36 to the user's head. As such, the head strap assembly 36 may securely attached the guest interface device 14 to the head of the user to substantially block movement of the guest interface device 14 relative to the user's head. Conversely, if the inner circumferential dimension 212 is too small to allow positioning of the head strap assembly 36 on the user's head, the user may rotate the adjustment knob 182 to enlarge the inner circumferential dimension 212 of the head strap assembly 36. It should be appreciated that, in some embodiments, the adjustment straps 48 and the adjustment assembly 50 may be replaced with a belt (e.g., leather belt), a hook and loop fastener, or another suitable fastener or strap that may be used to facilitate size adjustment of the head strap assembly 36.

In some embodiments, the rearward strap 46 may include guard flaps 214 that may define distal ends (e.g., end portions) of the rearward strap 46. The guard flaps 214 may be formed from a flexible material (e.g., polymeric material) and configured to rest on corresponding inner surfaces 216 of the first and second adjustment straps 164, 166. In some embodiments, the guard flaps 214 may extend along a portion of or all of the elongated openings 168, even when the head strap assembly 36 is transitioned to a fully expanded positioned (e.g., a position in which the inner circumferential dimension 212 is at an upper threshold value). In this manner, the guard flaps 214 may substantially block the user's hair from contact and/or possible entanglement with the first and second racks 170, 172, the pinion 174, and/or other components of the adjustment assembly 50. As such, the guard flaps 214 may reduce or substantially eliminate a likelihood of the user's hair being entangled in any of the aforementioned components during use of the guest interface device 14.

In some embodiments, the adjustment knob 182 and/or the pivoting knobs 190 may include smooth outer circumferential surfaces 220 that are devoid or ribbing, knurling, or other similar features. As such, a likelihood of contaminant buildup (e.g., grime) on the adjustment knob 182 and/or the pivoting knobs 190 due to repeated use of the guest interface device 14 (e.g., by multiple different guests over time) may be reduced. Moreover, the smooth outer circumferential surfaces 220 of the adjustment knob 182 and/or the pivoting knobs 190 may facilitate cleaning operations that may be performed on the guest interface device 14, as discussed in detail below. In certain embodiments, the adjustment knob 182 and/or the pivoting knobs 190 may include substantially planar surfaces 222 that may facilitate application of insignias (e.g., stickers, painted features) to the knobs 182, 190 and/or allow the knobs 182, 190 to be more easily themed (e.g., colored, decorated, or otherwise modified) to match a theme (e.g., space theme, jungle theme) of an amusement park attraction in which the guest interface device 14 is to be implemented.

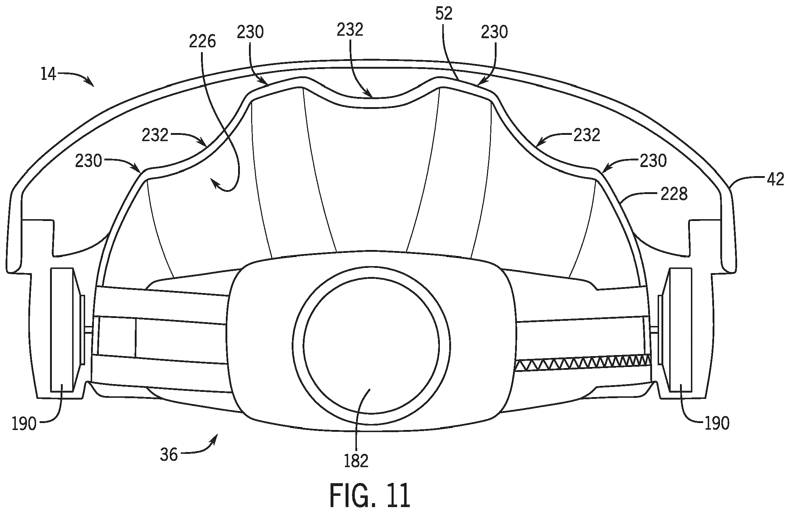

In some embodiments, when the guest interface device 14 is positioned on the head of the user (e.g., in a fitted configuration), an inner surface 226 of the mask 52 may rest on the user's head (e.g., on the forehead and/or scalp). As such, the mask 52 may support at least a portion of the weight of the guest interface device 14 and/or the wearable visualization device 12 that may be coupled to the guest interface device 14. The mask 52 may be formed from a polymeric material (e.g., rubber, plastic) or from another suitable material. In certain embodiments, the inner surface 226 of the mask 52 may include a contoured profile 228 having a plurality of crests 230 and a plurality of troughs 232 (see also, e.g., FIG. 11). In some embodiments, portions of the inner surface 226 corresponding to the crests 230 may not rest on the head of the user when the guest interface device 14 is in the fitted configuration. As such, the crests 230 may form fluid channels (e.g., pockets of air) that extend between the user's head and the mask 52 when the guest interface device 14 is in the fitted configuration, which may allow ambient air to flow between portions of the mask 52 and the user's head to provide ventilation and/or cooling. It should be appreciated that, in certain embodiments, the mask 52 may include perforations formed therein in addition to, or in lieu of, the contoured profile 228, to facilitate ventilating and/or cooling the user's head.

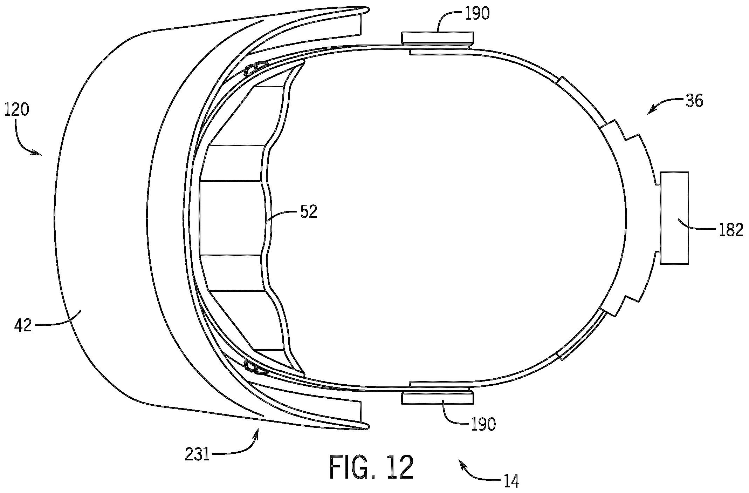

As noted above, the first attachment features 54 of the head strap assembly 36 are configured to engage with the second attachment features 56 of the interface frame 40 to facilitate coupling the visor assembly 148 to the head strap assembly 36. FIG. 12 is a top view of an embodiment of the guest interface device 14, illustrating the visor assembly 148 in an assembled configuration 231 with the head strap assembly 36.

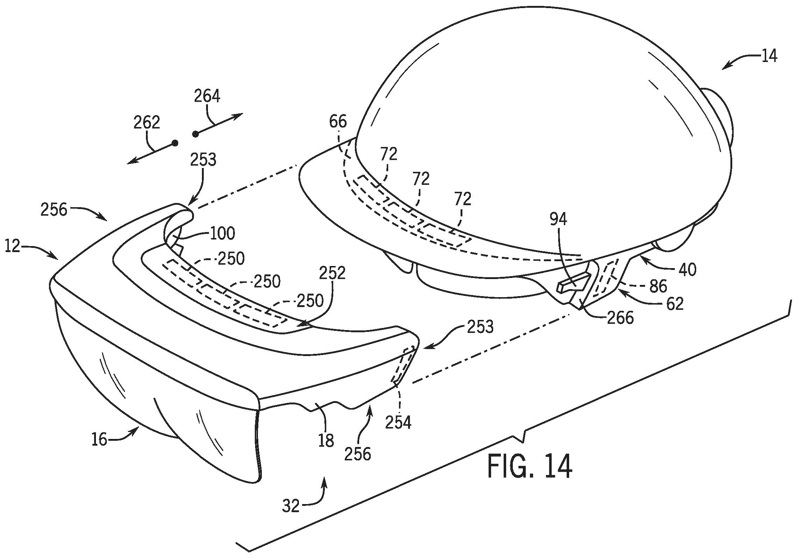

As briefly discussed above, the primary magnets 72 (e.g., a first plurality of magnets), the secondary magnets 86 (e.g., a second plurality of magnets), and/or the support ribs 94 of the guest interface device 14 may be configured to engage with corresponding magnets of the wearable visualization device 12 and/or the support grooves 100 of the wearable visualization device 12 to facilitate coupling the wearable visualization device 12 to the guest interface device 14. For example, to provide context for the following discussion, FIG. 13 is a rear view of an embodiment of the wearable visualization device 12. FIG. 14 is a perspective view of an embodiment of the wearable visualization device 12 and the guest interface device 14. FIGS. 13 and 14 will be discussed concurrently below. Furthermore, it should be noted that FIG. 14 illustrates a different structure for the guest interface device 14 (e.g., a helmet, compared to a visor of FIGS. 1-3, 6, and 10-13), as various different structures for the guest interface device 14 are envisioned.

The wearable visualization device 12 may include one or more tertiary magnets 250 positioned near a panel 252 of the housing 18. The tertiary magnets 250 may be positioned within an interior of the housing 18 and/or may be integrated within the housing 18 (e.g., hermetically sealed within the panel 252). As shown in the illustrated embodiments, the panel 252 may extend between a pair of peripheral portions 256 of the housing 18 that may define respective distal ends 253 (e.g., end portions) of the housing 18. The wearable visualization device 12 may include one or more quaternary magnets 254 that are disposed within the peripheral portions 256. Particularly, similar to the tertiary magnets 250 (e.g., a third plurality of magnets), the quaternary magnets 254 (e.g., a fourth plurality of magnets) may by positioned within an interior of the housing 18 and/or may be integrated within the housing 18 (e.g., hermetically sealed within corresponding panels of the peripheral portions 256). It should be understood that, in other embodiments, the tertiary magnets 250 and/or the quaternary magnets 254 may be coupled to and/or integrated with any other suitable component or portion of the wearable visualization device 12. Moreover, in certain embodiments, the wearable visualization device 12 may not include the tertiary magnets 250 or the quaternary magnets 254.

It should be noted that the magnets 72, 86, 250, and 256 are described herein as primary magnets, secondary magnets, tertiary magnets, and quaternary magnets, respectively, to facilitate discussion. However, other terms may be used to refer to the magnets 72, 86, 250, and 256 (e.g., first magnets, second magnets, third magnets, and fourth magnets, respectively). Moreover, it should be understood that the magnets 72, the magnets 86, the magnets 250, and the magnets 256 may each include a single magnet (e.g., a single magnet 72, a single magnet 86, a single magnet 250, and a single magnet 256) or a plurality of magnets.

The support grooves 100 are formed within the peripheral portions 256 and extend along at least a portion of a surface 258 of the housing 18. For example, the support grooves 100 may extend from the distal ends 253 of the housing 18 generally along a direction 262. To couple the wearable visualization device 12 to the guest interface device 14, the user may (e.g., while holding the guest interface device 14 in the user's hands and while the guest interface device 14 is separated from the user's head; while wearing the guest interface device 14 on the user's head) translate the wearable visualization device 12 toward the guest interface device 14 in a direction 264, generally opposite to the direction 262, to enable the support ribs 94 of the guest interface device 14 to engage with the corresponding support grooves 100 of the wearable visualization device 12. The user may translate the wearable visualization device 12 along the support ribs 94 (e.g., in the direction 264) until the distal ends 253 of the housing 18 abut corresponding receiving faces 266 of the first and second peripheral ends 62, 64 of the interface frame 40. As such, the secondary magnets 86 of the guest interface device 14 may align with and magnetically couple to the quaternary magnets 254 of the wearable visualization device 12.

At least a portion of the panel 252 of the wearable visualization device 12 may be configured to translate beneath and along the lip 66 of the interface frame 40 to enable the primary magnets 72 of the interface frame 40 to align with and magnetically coupled to tertiary magnets 250 of the wearable visualization device 12. To this end, the mechanical engagement between the support ribs 94 and the support grooves 100 may support substantially all of a weight of the wearable visualization device 12 (e.g., when coupled to the guest interface device 14), while the magnetic engagement between the primary and tertiary magnets 72, 250 and the secondary and quaternary magnets 86, 254 blocks the wearable visualization device 12 from disengaging (e.g., sliding off of) the guest interface device 14. Indeed, it should be understood that a force utilized to magnetically decouple the primary and tertiary magnets 72, 250 and to magnetically decouple the secondary and quaternary magnets 86, 254, such as when transitioning the wearable visualization device 12 from the engaged configuration 30 (e.g., as shown in FIG. 1) to the detached configuration 32, may be greater than, for example, a force acting on the wearable visualization device 12 due to gravity, due to shaking or turning of the user's head, or due to other inadvertent contact with the wearable visualization device 12. Accordingly, the magnets 72, 86, 250, and 254, in conjunction with the support ribs 94 and the support grooves 100, may be configured to retain the wearable visualization device 12 in the engaged configuration 30 on the guest interface device 14 until the user manually removes the wearable visualization device 12 from the guest interface device 14.

To remove the wearable visualization device 12 from the guest interface device 14, the user may translate the wearable visualization device 12 away from the guest interface device 14 in the direction 262, generally opposite to the direction 264, to enable the primary magnets 72 of the guest interface device 14 to magnetically decouple from the tertiary magnets 250 of the wearable visualization device 12 and/or to enable the secondary magnets 86 of the guest interface device 14 to magnetically decouple from the quaternary magnets 254 of the wearable visualization device 12. The user may continue to translate the wearable visualization device 12 in the direction 262, relative to the guest interface device 14, to remove (e.g., decouple) the wearable visualization device 12 from the guest interface device 14.

It should be appreciated that, in certain embodiments, the primary magnets 72 or the tertiary magnets 250, and/or the secondary magnets 86 or the quaternary magnets 254, may be replaced with a suitable reaction material (e.g., metallic plates). As such, the magnets 72, 86, 250, and/or 254 may be configured to attract a corresponding reaction material instead of another magnet. Moreover, in certain embodiments, any of the magnets 72, 86, 250, and/or 254 may be replaced with suitable electromagnets that are powered via a wired or wireless power source (e.g., a battery). In such cases, the electromagnets may be deactivated to enable separation of the wearable visualization device 12 from the guest interface device 14 at certain times, such as during an unloading process in which the user is unloading from the ride vehicle of the amusement park ride. Similarly, the electromagnets may be activated to facilitate securement of the wearable visualization device 12 to the guest interface device 14 at certain times, such as during a loading process in which the user is loading onto the ride vehicle of the amusement park ride.

By enabling users to fit or remove the wearable visualization device 12 on the guest interface device 14, instead of attaching the wearable visualization device 12 directly to the head of the user, direct, physical contact between the wearable visualization device 12 and the user's head may be substantially avoided. Such a configuration may block debris (e.g., sweat, smudges) from building up on the displays 20 (see, e.g., FIG. 1) of the wearable visualization device 12. Thus, cleaning operations on the wearable visualization device 12 (e.g., between ride cycles of an attraction) may be substantially mitigated or eliminated, thereby increasing an overall operational efficiency (e.g., a passenger throughput) of the attraction and/or improving the experience of the user.

In operation, the user (e.g., guest) may be provided with a dedicated guest interface device 14 (e.g., upon entry into the amusement park and/or while waiting in line for the amusement park attraction) that may be worn by that particular user for a period of time, such as throughout the amusement park (e.g., in multiple different attractions of the amusement park) or throughout the duration of the amusement park attraction (e.g., on a single ride). For example, prior to boarding the attraction, the user may fit the guest interface device 14 on the user's head in accordance with the techniques discussed above. While boarding the attraction, the user may couple the wearable visualization device 12 (e.g., which may be coupled to a structure, such as the ride vehicle, via the cable 28 of FIG. 1) to the guest interface device 14. As such, the user may enjoy the experience provided by the attraction and the AR/VR system 10. When deboarding the attraction, the user may decouple the wearable visualization device 12 from the guest interface device 14. In some cases, upon deboarding the attraction, the user may then discard of the guest interface device 14 at an appropriate location (e.g., a collection bin). To this end, the user may utilize the wearable visualization device 12 during the attraction substantially without physically contacting the wearable visualization device 12 with the guest's head, which may reduce or eliminate the accumulation of contaminates (e.g., grime) on the wearable visualization device 12. The used guest interface device 14 may subsequently be cleansed prior to redistribution to other users. As noted above, the user may wear the guest interface device 14 on multiple different rides or during multiple different attractions. For example, the user may carry the guest interface device 14 from ride to ride, and connect the guest interface device 14 to the wearable visualization device 12 of each ride vehicle of each ride to enjoy a unique AR/VR experience for each ride.

FIG. 15 is a perspective view of an embodiment of the guest interface device 14. In some embodiments, the guest interface device 14 may be placed in a cleaning device 270 (e.g., an industrial washer) that is configured to cleanse the guest interface device 14 of any debris (e.g., dust, pollen, hair) that may have accumulated on the guest interface device 14 during use of the guest interface device 14. In some embodiments, prior to being positioned within the cleaning device 270, an operator (e.g., a maintenance technician) may rotate (e.g., about the axis 202) the second head strap portion 160 of the head strap assembly 36 relative to the first head strap portion 150 of the head strap assembly 36 until the adjustment knob 182 is positioned substantially adjacent to an inner vertex 272 of the forward strap 44. This configuration of the guest interface device 14 may enable the guest interface device 14 to be more compact and/or for user-contacting surfaces that contact the user during use of the guest interface device 14 to be accessible for cleaning. This configuration of the guest interface device 14 will be referred to herein as a cleaning configuration of the guest interface device 14. Upon being transitioned to the cleaning configuration, the operator may position the guest interface device 14 in the cleaning device 270 such that the visor 42 is oriented upward (e.g., relative to a direction of gravity). In this manner, water, detergent, or other cleaning fluids that may be utilized in the cleaning device 270 may flow off of the guest interface device 14 upon performance of the cleaning operations, substantially without accumulating in any pockets or cavities of the guest interface device 14. In some embodiment, one or more drainage apertures 274 (e.g., weep holes) may be formed within the rearward strap 46 and/or within another suitable components of the guest interface device 14 to facilitate drainage of fluid from any pockets or cavities that may be present on these components. It should be understood that, in some embodiments, the guest interface device 14 may be devoid of exposed metallic components (e.g., the primary and secondary magnets 72, 86), such that the guest interface device 14 does not incur corrosion due to cleaning operations performed by the cleaning device 270.

As set forth above, embodiments of the present disclosure may provide one or more technical effects useful for facilitating quick and comfortable securement of a wearable visualization device to the head of a user while mitigating or substantially eliminating contamination of the wearable visualization device due to direct, physical contact between the user and the wearable visualization device. It should be understood that the technical effects and technical problems in the specification are examples and are not limiting. Indeed, it should be noted that the embodiments described in the specification may have other technical effects and can solve other technical problems.

While the embodiments set forth in the present disclosure may be susceptible to various modifications and alternative forms, specific embodiments have been shown by way of example in the drawings and have been described in detail herein. However, it should be understood that the disclosure is not intended to be limited to the particular forms disclosed. The disclosure is to cover all modifications, equivalents, and alternatives falling within the spirit and scope of the disclosure as defined by the following appended claims.

The techniques presented and claimed herein are referenced and applied to material objects and concrete examples of a practical nature that demonstrably improve the present technical field and, as such, are not abstract, intangible or purely theoretical. Further, if any claims appended to the end of this specification contain one or more elements designated as "means for [perform]ing [a function]..." or "step for [perform]ing [a function]...", it is intended that such elements are to be interpreted under 35 U.S.C. 112(f). However, for any claims containing elements designated in any other manner, it is intended that such elements are not to be interpreted under 35 U.S.C. § 112(f).

Further features and aspects of the invention may reside in the below clauses:
There is described an interface device for a wearable visualization device, comprising: a head strap assembly configured to couple to a head of a user to secure the interface device to the head; an interface frame coupled to the head strap assembly; and a magnet supported on the interface frame, wherein the magnet enables the interface device to removably couple to the wearable visualization device.

The head strap assembly may comprise a first head strap portion comprising: a forward strap; and a mask coupled to the forward strap. When the interface device is in a fitted configuration on the head of the user, the mask may be configured to rest on the head to support at least a portion of a weight of the interface device.

The mask may comprise a contoured profile such that, in the fitted configuration of the interface device, the mask forms one or more fluid channels extending between the mask and the head of the user.

The head strap assembly may comprise a second head strap portion comprising: a rearward strap; a plurality of adjustment straps movably coupled to the rearward strap and coupled to the forward strap; and an adjustment assembly coupled to the rearward strap and the plurality of adjustment straps. The adjustment assembly may be configured to translate the plurality of adjustment straps along the rearward strap to adjust a circumferential dimension of the head strap assembly.

Each adjustment strap of the plurality of adjustment straps may comprise an elongated slot formed therein. The rearward strap may comprise a plurality of flexible guard flaps extending therefrom. The plurality of flexible guards flaps may be configured to extend along the plurality of adjustment straps to cover at least a portion of the elongated slot of each adjustment strap of the plurality of adjustment straps.

The first head strap portion may be pivotably coupled to the second head strap portion.

The interface device may comprise a visor removably coupled to the interface frame.

The magnet may be positioned in a central portion of the interface frame. The interface device may comprise a plurality of secondary magnets positioned at lateral end portions of the interface frame. The magnet and the plurality of secondary magnets may be configured to enable the interface device to removably couple to the wearable visualization device.

The interface device may comprise a plurality of support ribs that extend from the interface frame and that are configured to engage a plurality of support grooves of the wearable visualization device to support the wearable visualization device on the interface frame.

There is also described an augmented reality, virtual reality, and/or mixed reality (AR/VR) system, comprising: an interface device, comprising: a head strap assembly configured to couple to a head of a user; and an interface frame comprising a first plurality of magnets; and a wearable visualization device comprising a second plurality of magnets and configured to removably couple to the interface frame to transition between a disengaged configuration and an engaged configuration, wherein the first plurality of magnets magnetically couples to the second plurality of magnets to retain the wearable visualization device on the interface device in the engaged configuration.

The first plurality of magnets may be hermetically sealed in corresponding pockets formed within the interface frame.

The interface frame may comprises a body portion and the wearable visualization device comprises a housing, wherein a plurality of support ribs extends from the body portion and a plurality of support grooves is formed within the housing, wherein the plurality of support grooves is configured to engage with and translate along the plurality of support ribs to guide the second plurality of magnets toward the first plurality of magnets to facilitate transitioning from the disengaged configuration to the engaged configuration.

The head strap assembly may comprise a first head strap portion and a second head strap portion that are pivotably coupled to one another via knobs. The knobs may be configured to retain the first head strap portion in a plurality of discrete angled orientations relative to the second head strap portion.

The AR/VR system may comprise an adjustment assembly coupled to the second head strap portion. The first head strap portion and the second head strap portion may collectively form an inner circumference of the head strap assembly. Actuation of the adjustment assembly may adjust a size of the inner circumference.

The interface device may comprise a visor having protrusions, wherein the protrusions are configured to engage with respective apertures formed within the interface frame to couple the visor to the interface frame.

The AR/VR system may comprise a set of plugs configured to couple to the interface frame to block access to the protrusions.

The AR/VR system may comprise a mask having a plurality of protrusions, wherein the plurality of protrusions is configured to engage with a plurality of apertures formed within the head strap assembly to removably couple the mask to the head strap assembly.

There is also described a wearable visualization system, comprising: an interface device comprising an interface frame comprising peripheral portions and a lip extending between the peripheral portions, wherein a first plurality of magnets is positioned adjacent the lip and a second plurality of magnets is positioned adjacent the peripheral portions; and a wearable visualization device comprising a housing having additional peripheral portions and a panel extending between the additional peripheral portions, wherein a third plurality of magnets is positioned adjacent the panel and a fourth plurality of magnets is positioned adjacent the additional peripheral portions, wherein the first plurality of magnets is configured to magnetically couple to the third plurality of magnets and the second plurality of magnets is configured to magnetically couple to the fourth plurality of magnets to couple the wearable visualization device to the interface device.

The interface device may comprise a plurality of support ribs extending from the interface frame. The wearable visualization device may comprise a plurality of support grooves formed within the housing, wherein the plurality of support ribs is configured to receive and engage with the plurality of support grooves to support the wearable visualization device on the interface device.

The interface device may comprise a head strap assembly configured to couple the interface device to a head of a user, wherein the wearable visualization device, when coupled to the interface device, enables the user to view augmented reality features, virtual reality features, or both.

## Claims

1. An interface device (14) for a wearable visualization device (12), the interface device (14) comprising:
a head strap assembly (36) configured to couple to a head of a user to secure the interface device (14) to the head;
an interface frame (40) coupled to the head strap assembly (36) and configured to directly couple to a housing (18) of the wearable visualization device (12);
a mask (52) coupled to the head strap assembly (36), the mask (52) comprising a surface wherein, in a fitted configuration of the interface device (14) on the head of the user, a first portion of the surface is configured to rest on the head of the user such that the mask (52) supports at least a portion of a weight of the interface device (14), and wherein, in the fitted configuration of the interface device (14), a second portion of the surface is configured not to rest on the head of the user; and
one or more magnets (72, 86) supported on the interface frame (40), wherein the one or more magnets (72, 86) enable the interface frame (14) to removably directly couple to the housing (18) of the wearable visualization device (12).

2. The interface device (14) of claim 1, wherein the head strap assembly (36) comprises a first head strap portion (150) comprising a forward strap (44), wherein the mask (52) is coupled to the forward strap (44).

3. The interface device (14) of claim 2, wherein the head strap assembly (36) comprises:
a second head strap portion (160) comprising:
a rearward strap (46);
one or more adjustment straps (48) movably coupled to the rearward strap (46) and coupled to the forward strap (44); and
an adjustment assembly (50) coupled to the rearward strap (46) and the one or more adjustment straps (164, 166), wherein the adjustment assembly (50) is configured to translate the one or more adjustment straps (164, 166) along the rearward strap (46) to adjust a circumferential dimension of the head strap assembly (36).

4. The interface device (14) of claim 3, wherein each adjustment strap (164, 166) of the one or more adjustment straps (164, 166) comprises an elongated slot (168) formed therein, wherein the rearward strap (46) comprises one or more flexible guard flaps (214) extending therefrom, wherein the one or more flexible guard flaps (214) are configured to extend along the one or more adjustment straps (164, 166) to cover at least a portion of the elongated slot (168) of each adjustment strap of the one or more adjustment straps (164, 166).

5. The interface device (14) of claim 3, comprising one or more pivoting knobs (190) pivotably coupling the first head strap portion (150) to the second head strap portion (160) such that the first head strap portion (150) is configured to rotate about an axis of the one or more pivoting knobs (190) relative to the second head strap portion (160).

6. The interface device (14) of claim 1, wherein the one or more magnets comprise a first magnet positioned in a central portion of the interface frame (40) and a plurality of secondary magnets positioned at lateral end portions of the interface frame (40), wherein optionally the one or more magnets (72) and the plurality of secondary magnets (86) are configured to magnetically couple to one or more additional magnets on the housing of the wearable visualization device (12) to retain the wearable visualization device (12) on the interface device (14) in an engaged configuration.

7. The interface device (14) of claim 1, comprising one or more support ribs (94) that extend from the interface frame (40) and that are configured to engage one or more support grooves (100) of the wearable visualization device (12) to support the wearable visualization device (12) on the interface frame (40).

8. The interface device (14) of claim 1, wherein the one or more magnets are hermetically sealed within a pocket (70) of the interface frame (40).

9. The interface device (14) of claim 1, wherein in the fitted configuration of the interface device, the first portion of the surface is configured to rest on a forehead of the user, a scalp of the user, or both.

10. The interface device (14) of claim 1, wherein the surface forms a channel between the surface and the head of the user.

11. The interface device (14) of claim 1, wherein the interface frame (40) is configured to directly couple to the housing (18) of the wearable visualization device (12) to position a display (20) that is configured to display virtual images and that extends from the housing (18) of the wearable visualization device (12) to cover lines of sight of both eyes of the user to when the interface device (14) with the housing (18) coupled thereto is in a fitted configuration.

12. An augmented reality, virtual reality, and/or mixed reality (AR/VR) system, comprising:
the interface device (14) of any of Claims 1 to 11
and
a wearable visualization device (12), comprising:
the housing (18) configured to removably couple to the interface frame (40);
a display (20) extending from the housing (18) and configured to display virtual images, wherein the display (20) is configured to cover lines of sight of both eyes of the user in an engaged configuration of the wearable visualization device (14) on the interface frame (40) to enable the user to view the virtual images; and
one or more additional magnets coupled to the housing (18) and configured to removably couple the housing (18) to the interface frame (40) to transition the wearable visualization device (12) between a disengaged configuration and the engaged configuration, wherein the one or more magnets (72) couple to the one or more additional magnets to retain the wearable visualization device (12) on the interface device (14) in the engaged configuration.

13. The AR/VR system of claim 12, wherein the interface frame (14) comprises a body portion (60), wherein one or more support ribs (94) extend from the body portion (60) and one or more support grooves (100) are formed within the housing (18) of the wearable visualization device (12), wherein the one or more support grooves (100) are configured to engage with and translate along the one or more support ribs (94) to guide the one or more additional magnets toward the one or more magnets to facilitate transitioning from the disengaged configuration to the engaged configuration.

14. The AR/VR system of claim 12, wherein the head strap assembly (36) comprises
wherein the one or more knobs are configured to retain the first head strap portion (150) in one or more discrete angled orientations relative to the second head strap portion (160), wherein the adjustment assembly (50) is coupled to the second head strap portion (160), wherein the first head strap portion (150) and the second head strap portion (160) collectively form an inner circumference of the head strap assembly, and wherein actuation of the adjustment assembly (50) adjusts a size of the inner circumference.

15. The AR/VR system of claim 12, wherein the interface frame (14) comprises a lip (66) comprising the one or more magnets coupled thereto, wherein the housing (18) comprises a panel (252) having the one or more additional magnets coupled thereto, and wherein the panel (252) is configured to translate along the lip (66) to enable the wearable visualization device (12) to transition from the disengaged configuration to the engaged configuration and to effectuate alignment of the one or more magnets with the one or more additional magnets.
